# EUROPEAN PATENT APPLICATION

(11) **EP 4 421 052 A1**
(43) Date of publication of application: **28.08.2024**
(21) Application number: 23203582.4
(22) Date of filing: 13.10.2023
(51) Int. Cl.: C04B 35/532, C04B 35/632, C04B 35/634, C04B 35/636, C04B 38/00, C25C 3/08

(54) **A GREEN CARBON PASTE COMPRISING A GREEN BINDER BASED ON GLUCOSE AND GLYCEROL AS A TAMPING/RAMMING PASTE**

(30) Priority: 22.02.2023 IN 202321012274
(71) Applicant: Hindalco Industries Limited, Mumbai, Maharashtra 400 013 (IN)
(72) Inventor: Ghosh,, Dipankar, 590010 Karnataka (IN); Patil,, Naganagouda R., 590010 Karnataka (IN); Kumbar,, Basavaraj U., 590010 Karnataka (IN); Devale,, Pramod P., 590010 Karnataka (IN); Kapuri,, Nageswar, 590010 Karnataka (IN)
(74) Representative: Barker Brettell LLP

(57) **Abstract**

The invention relates to a green carbon paste comprising electrically calcined anthracite coal (ECA) and a green binder comprising glucose, glycerol and a minimum amount of epoxy resin which is used as a tamping/ramming paste in lining cathodes in an aluminium electrolysis cell. The binder is substantially devoid of volatile organic compounds and thereby the paste is environment friendly.

## Description

### FIELD OF INVENTION

The invention relates to a green carbon paste comprising a green binder based on glucose and glycerol as a tamping/ramming paste for lining of an electrolysis cell.

### BACKGROUND OF THE INVENTION

During production of aluminium by the electrolytic reduction of alumina in a cell, the cathode of the electrolytic pot is a large tank lined with carbon. Carbon blocks with collector bars embedded in them from the bottom of the pot and are spaced with uniform gap for ramming a seam. Conventionally a ramming/tamping paste is made up of a graded aggregate of electrically calcined anthracite coal with a mixture of coal tar pitch and anthracene oil as binder.

The main purpose of the ramming paste, both in the joints between the cathode blocks and in the peripheral seam, is to fill the voids between the prebaked blocks and prevent metal and electrolyte from penetrating the cathode. Leakage of metal and electrolyte, damages the cathode and may lead to premature pot failure. Ramming paste is a critical part of the cathode and plays an important role in the electrolysis pot, ensuring pot tightness by preventing metal infiltration at the block/paste interface. On one hand, it prevents the infiltration of liquid aluminium into the electrolysis cell, and on the other hand, it seals the cathode blocks, which protect them from damage and ultimately from failure. Thus, ramming paste plays a fundamental role in the life of the electrolysis cell and its energy efficiency. High quality ramming paste is installed in a cathode to improve operation and prolong life of electrolysis pot.

Usually, coal tar pitch and anthracene oil based binder are used in ramming pastes. The coal tar pitch and anthracene oil based binder contains polycyclic aromatic hydrocarbon (PAH) and volatile organic compounds (VOC). The paste has a very high content of volatile toxic organic compound such as Fluoranthene, Benzofluoranthene, Benzo(a)pyrene, Indeno-pyrene, Benzo-perylene, Naphtalene, Acenaphtene, Fluorene, Phenantrene, Pyrene, Benzo-anthracene, Chrysene, Acenaphtylene, Dibenzo-anthracene, Anthracene, and BbNT. During baking, the paste is heated at around 1000°C or above, which results in volatile organic compounds being released from the paste thereby causing environmental pollution as well as several health issues including cancer. Therefore, such ramming paste require special handling during baking in the pot lining.

Ramming pastes containing coal tar pitch and anthracene oil based binder are prepared at high temperatures of more than 140°C which consumes more energy. The need for such high temperature is due to higher softening point of coal tar pitch which also results in anthracene oil vapor contaminating the environment.

The aging of the coal tar pitch based ramming paste due to the evaporation of the softeners at room temperature that are added for malleability of the ramming paste is likely to influence its physical properties. Also, during processing, the ramming paste releases carcinogenic products such as polycyclic aromatic hydrocarbons, which constitutes a real danger for health. Thus, installation of ramming paste containing coal tar pitch and anthracene oil based binder leads to technical and quality issues, as well as health, safety, and environmental issues.

To address the environmental pollution and reduce the hazardous effects during handing of conventional ramming pastes, the coal tar pitch and anthracene oil based binder is partly substituted or completely replaced with alternatives such epoxy resin. However, epoxy resin being expensive increases the cost of the ramming paste. Also, ramming pastes containing only epoxy resin require coal having high purity otherwise, the paste will have very low crushing strength after baking, and thereby there is chance of operation failure.

Hence, there is a need for a ramming paste which is environment friendly, safe during handling and economically viable.

### SUMMARY OF THE INVENTION

The present invention addresses the above described disadvantages of coal tar pitch and anthracene oil based ramming pastes by using a green binder based on glucose and glycerol.

In an aspect, the invention relates to a green carbon paste comprising electrically calcined anthracite coal (ECA) and a green binder comprising glucose, glycerol and a minimum amount of epoxy resin.

In another aspect, the invention relates to a green binder comprising glucose, glycerol and a minimum amount of epoxy resin.

### DETAILED DESCRIPTION OF THE INVENTION

In an aspect, the invention relates to a green carbon paste comprising electrically calcined anthracite coal (ECA) and a green binder comprising glucose, glycerol and a minimum amount of epoxy resin.

The paste comprises 84-88% wt. of electrically calcined anthracite coal and 12-16% wt. of the green binder.

In a preferred embodiment, the paste comprises 84% wt. of electrically calcined anthracite coal and 16% wt. of the green binder.

The electrically calcined anthracite coal has a particle in a range of -3 mesh to -200 mesh i.e., particle size of less than 6.7 mm to less than 75 µm particles. The electrically calcined anthracite coal occurs as aggregates which is ball milled to obtain particles -3 mesh to -200 mesh size. The electrically calcined anthracite coal provides higher strength, lower porosity, higher thermal shock resistance and higher conductivity to the ramming paste in comparison to calcined petroleum coke.

The green binder comprises 60-70% wt. of glucose, 15-20% wt. of glycerol and 10-20% wt. of epoxy resin.

Glucose is a liquid and has a viscosity in a range of 1,00,000-3,00,000 cP at 20°C. Epoxy resin has a viscosity in a range of 2000 to 5000 cP at 25°C as determined by ASTMD2196-05 and is diglycidyl ether of bisphenol-F. Glycerol has a purity of 99.5%.

Glucose/glycerol mixture is used as binder replacing coal tar pitch and anthracene oil based binder products as coal tar pitch and anthracene oil based binder products during processing release toxic chemical in the environment and cause environmental pollution.

The combination of glucose, glycerol and a minimum of epoxy resin provides a green carbon paste with desired properties.

Glycerol alone as a binder, results in a soft paste having very low compressive strength.

Glucose alone as a binder, results in a paste that is quite hard and has lower compressive strength, high resistivity, lower density and higher porosity which is not desirable. Also, the paste containing only glucose as a binder hardens upon storage which is not desired.

Epoxy resin being expensive when used alone as a binder increases the cost of the product. Also, paste containing only epoxy resin requires electrically calcined anthracite coal having high purity for better performance which further increases the product cost.

Glucose and epoxy resin are not compatible with each other, thereby the resulting paste is a hard material which is not desired. Addition of glycerol to a mixture of glucose and epoxy resin improves the compatibility of the mixture and thereby provides a paste with desired properties. Also, using the green binder in the paste does not require electrically calcined anthracite coal having high purity thereby making the paste and its process of preparation cost-effective. Further, as the green binder does not contain coal tar pitch and anthracene oil, it is processed at a lower temperature.

The paste after being baked at a temperature in a range of 950°C to 1200°C , preferably at a temperature of 960°C, has a porosity in a range of 24-30%, density in a range of 1.27-1.40 g/cc, compressive strength of greater than 60 kg/cm², preferably compressive strength is in a range of 80-120 kg/cm², and electrical resistivity equal to or less than 150 µΩm, preferably electrical resistivity is in a range of 60-150 µΩm.

The green carbon paste by having a green binder comprising glycerol, glucose and a minimum amount of epoxy resin is environment friendly as it has reduced amount of hazardous volatile organic compounds than that present in coal tar pitch and anthracene oil based binder. The green carbon paste has very low amounts of polycyclic aromatic hydrocarbons (PAH). Hence, the green carbon paste has a lower content of hazardous volatile matter. This is advantageous as during processing the green carbon paste reduces environmental pollution and also maintains desired physical, mechanical and electrical properties, thereby preventing operation failure and prolonging the electrolysis pot life.

The paste also does not have a harmful impact during pot preheating, early operation or regular operation. Also, absence of coal tar pitch and anthracene oil make the handling of the green carbon paste safe during installation (ramming/tamping). Further, as the paste does not require electrically calcined anthracite having high purity, and as the cost of the constituents of the green binder is also low, the paste is cost efficient.

The green carbon paste is prepared by mixing the electrically calcined anthracite coal and the green binder at a temperature in a range of 40°C to 80°C for 15- 30 minutes, preferably at a temperature in a range of 50°C to 70°C. The mixing is preferably carried out in a sigma mixer or a kneader.

The processing temperature for preparation of the green carbon paste is lower than the temperature used in preparation of ramming paste containing coal tar pitch and anthracene oil based binder, thereby the preparation of the green carbon paste results in power saving during the continuous production process.

The green carbon paste is used for tamping/ramming of seams both in the joints between the electrode blocks and in the peripheral seam of an aluminium electrolysis cell. The green carbon paste is used for tamping/ramming lining cathodes, preferably the green carbon paste is used as a ramming or tamping paste for lining cathodes of an aluminium electrolysis cell.

The invention also describes a process for lining of an aluminium electrolysis cell. The process comprises applying the green carbon paste in the joints between the cathode blocks and in the peripheral seam. Then, tamping the paste and baking the paste at a temperature in a range of 950°C to 1200°C after final tamping.

The baking step is carried out in a furnace under inert atmosphere such as nitrogen. In a preferred embodiment the paste is baked at a temperature of 960°C.

In another aspect, the present invention relates to a green binder comprising glucose, glycerol and a minimum amount of epoxy resin.

The binder requires the presence of all the three components to provide desired properties of compressive strength, porosity, resistivity when used in a carbon ramming/tamping paste.

In an embodiment, the green binder comprises 60-70% wt. of glucose, 15-20% wt. of glycerol and 10-20% wt. of epoxy resin.

### EXAMPLE

### Example 1: Green carbon paste of the invention

Electrically Calcined Anthracite (ECA) coal was sourced from China and its mesh size was fixed to be in a range of -3 mesh to -200 mesh i.e., particle size was below 6.7 mm.

A green binder containing 70% wt. of liquid Glucose (viscosity in a range of 1,00,000-3,00,000 cP at 20°C) (sourced from Gujarat Ambuja Export Limited), 20% wt. of Glycerol (99.5% purity, Thermo Fischer Scientific) and 10% wt. of diglycidyl ether of bisphenol-F as an epoxy resin (viscosity in a range of 2000 to 5000 cP at 25°C) (supplied by Grasim Chemical India) was prepared.

84% ECA coal and 16% wt. of green binder were mixed in a kneader at 80°C for 15- 30 minutes. The batch size was fixed to be 4 kg.

The green carbon paste was filled in a cylinder, tamped and baked in a furnace at a temperature in a range of 950°C to 1200°C.

### RESULTS AND DISCUSSION

The properties of paste of Example 1 after baking was measured as per standard procedures. The results are tabulated below in Table 1.

**Table 1**

| Properties | UNIT | Desired values | Example 1 |
|---|---|---|---|
| ASH | % | 6 Max | 5.27 |
| PLASTICITY | % | 0-2 | 0.00 |
| VM (volatile matter) | % | 20 Max | 16.48 |
| FIXED CARBON | % | 76 Min | 78.25 |
| Baked Properties | | | |
| POROSITY | % | 24-30 | 27.93 |
| APPARENT DENSITY | g/cc | 1.27-1.40 | 1.31 |
| ELECTRICAL RESISTIVITY | µΩm | 150 Max | 115.23 |
| COMPRESSIVE STRENGTH | kg/cm² | 60 Min | 89.04 |

The absence of plasticity of the green carbon paste during baking prevents expansion of material and thereby prevents operation failure.

The compressive strength of the paste of Example 1 prevents the penetration /infiltration of liquid aluminium inside the electrode during pot operation.

As the binder in the paste of Example 1 is substantially devoid of polyaromatic hydrocarbon no harmful volatile organic compounds are released in the environment during use.

The paste of Example 1 while having desirable properties of compressive strength, electrical resistivity, porosity, and low content of hazardous volatile matter after baking reduces environment pollution and health hazards associated with handling of such paste in lining of electrodes in an electrolysis cell.

The foregoing description of the disclosure has been set merely to illustrate the invention and is not intended to be limiting. Since modifications of the disclosed embodiments incorporating the spirit and substance of the invention may occur to a person skilled in the art, the invention should be construed to include everything within the scope of the disclosure.

## Claims

1. A green carbon paste comprising electrically calcined anthracite coal (ECA) and a green binder comprising glucose, glycerol and a minimum amount of epoxy resin.

2. The paste as claimed in claim 1, comprising 84-88% wt. of electrically calcined anthracite coal and 12-16% wt. of the green binder.

3. The paste as claimed in claim 1 or 2, comprising 84% wt. of electrically calcined anthracite coal and 16% wt. of the green binder.

4. The paste as claimed in claim 1, wherein electrical calcined anthracite coal has a particle size in a range of -3 mesh to -200 mesh.

5. The paste as claimed in claim 1, wherein the green binder comprises 60-70% wt. of glucose, 15-20% wt. of glycerol and 10-20% wt. of epoxy resin.

6. The paste as claimed in claim 1, wherein glucose is a liquid and has a viscosity in a range of 1,00,000-3,00,000 cP at 20°C,
epoxy resin has a viscosity in a range of 2000 to 5000 cP at 25°C as determined by ASTMD2196-05 and is diglycidyl ether of bisphenol-F, and
glycerol has a purity of 99.5%.

7. The paste as claimed in claim 1, wherein the paste after being baked at a temperature in a range of 950° C to 1200°C, has a porosity in a range of 24-30%, density in a range of 1.27-1.40 g/cc, compressive strength of greater than 60 kg/cm², and electrical resistivity of equal to or less than 150 µΩm.

8. A method for preparation of the green carbon paste as claimed in claim 1, the process comprising:
mixing electrical calcined anthracite coal and the green binder at a temperature in a range of 40-80°C.

9. The method as claimed in claim 8, wherein the temperature is in a range of 50°C-70°C.

10. The paste as claimed in claim 1, as a ramming or tamping paste for lining cathodes of an aluminium electrolysis cell.

11. A process for lining of an aluminium electrolysis cell, the process comprising:
applying the paste as claimed in claim 1, in the joints between the cathode blocks and in the peripheral seam;
tamping the paste; and
baking the paste at a temperature in a range of 950°C to 1200°C.

12. A green binder comprising glucose, glycerol and a minimum amount of epoxy resin.

13. The green binder as claimed in claim 12, comprising 60-70% wt. of glucose, 15-20% wt. of glycerol and 10-20% wt. of epoxy resin.
